(19) Europäisches Patentamt / European Patent Office / Office européen des brevets

(11) **EP 2 530 868 A1**

(12) **EUROPEAN PATENT APPLICATION**

(43) Date of publication:
**05.12.2012 Bulletin 2012/49**

(51) Int Cl.:
*H04L 9/32* *(2006.01)* *G07F 7/10* *(2006.01)*
*H04L 29/06* *(2006.01)*

(21) Application number: **11305668.3**

(22) Date of filing: **31.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Gemalto SA**
**92190 Meudon (FR)**

(72) Inventor: **GULLBERG, Peter**
**92197 Meudon Cedex (FR)**

(54) **Method for generating an anonymous routable unlinkable identification token**

(57) The invention relates to a method for identifying a cardholder to a service provider, said cardholder having an EMV chip card delivered by an issuer wherein it comprises creating a token for identification to said service provider from said EMV chip card.

figure 1

**Description**

**FIELD OF THE INVENTION**

The present invention relates generally to a method for identifying a cardholder to a service provider and more specifically to a method for generating an anonymous, unlinkable identification, authentication and authorization using a standard EMV chip card.

**BACKGROUND OF THE INVENTION**

Privacy is of great concern, and currently there is no known method that makes anonymous identification without revealing data that is linkable to the cardholder or any of his different persona when using standard EMV-chip card.

Protecting the identity on the internet is becoming harder and harder. An identity is a valuable item to both attackers as well as corporations, even though the objective may be different, the end-user still needs to feel safe online, where maintaining privacy and protecting the identity are essential building blocks for the future Internet.

A user usually mixes multiple personas and contexts in a same browser window, and each of these contexts must be clearly separated from each other. The user needs assurance that data and identity cannot be linked between different personas or contexts. This put great demand on privacy, and assurance that the person is not being put in a situation that would compromise his identity, or link his different personas together. All information put on the web is a trail that may never be erased.

The identity provider may do identity federation for several of these contexts or there will be one identity provider for each context. The importance is not only to have leakage of private personal data between the different contexts, and only trusted parties handle the information and that each context has strict adherence to the privacy rules of that scheme.

Having control over your identity on the internet is essential. Depending in which context you are, you may want to reveal completely different information and to enable this, keeping persona's separated and maintaining privacy will be key aspects as we will be much more concerned as services evolve, and today we don't have a good model for this.

The document WO2002087148 of Camenisch et. Al, proposes an anonymous credential system that provides a remote registration process to establish the link between a key pairs and a pseudonym, that can be used in the context or one persona. This enables the end-user to manage multiple personas, and provide unlinkability between these pseudonyms. Nevertheless, even if these data are stored in a hardware device, the identity of the different persona can be discovered and observed. With the trend in computers programs, toolbars and other software running in end-users PC are becoming more and more advanced. These pseudonyms are therefore traceable by for example a toolbar or other software on the PC, effectively being able to trace the user behavior of the different persona the end-user is exposing. Furthermore, processing software at merchant may collect information of one persona at the merchant, and thereby effectively being able to trace the behavior of that end-user.

Another solution of Pashalidis et. Al. (WO2010/028705A1) proposes a framework which uses the Dynamic Data Authentication (DDA) functionality that exists on deployed EMV chip, intended to authenticate the card, whereby the card reading device generate an internal authentication, that is verifiable by the service provider when the cardholder have the certificate placed on the card. Nevertheless, the user have to expose his certificate and card number in order for the service provider to verify him, which does not allow anonymity, instead the user is exposed both in transit and to the service provider, which effectively prevents the usage of anonymous credentials and multiple persona. Also there is no readily available infrastructure to verify revocation status of an EMV chip card.

Using a credit card for shopping reduces anonymity, as the cardholder is required to have a name on his credit card, mainly because of legal reasons. Being anonymous on the internet is a key aspect for many cardholders, as they don't want to reveal their true identity, and particular not to anyone other than the intended one.

Using the chip card as an identifier for multiple services is clearly advantageous for the issuer, as he will only have to issue one credential, and the cardholder only needs to remember one PIN code. However the problem faced by the cardholder, is that cardholders unwittingly mixes persona's when surfing on the internet, and sometime also simultaneously, where he's accessing his bank and the same time he's logged into different websites.

There is then a need for a solution which overcomes the drawbacks of the prior art and therefore to find a solution for identifying and authenticating a cardholder without disclosing any data, i.e to find a solution establishing unlinkability between the different personas.

It is then an object of the invention to provide the user identity to an identity provider anonymously, without having to disclose any sensitive data that could be used to observe the identity of the cardholder.

Thereto, the present invention provides a method for identifying a cardholder to a service provider, said cardholder having an EMV chip card delivered by an issuer wherein it comprises creating a token for identification to said service provider from said EMV chip card.

According to other aspects of the invention, the method may comprise extracting a public key of the issuer from the EMV chip card of the user.

According to other aspects of the invention, the method may comprise encrypting a message with the public key of the issuer, said message comprising identifying data, padding information.

According to other aspects of the invention, the method may comprise using the PIN of within said message.

According to other aspects of the invention, the method may comprise selecting an identity.

According to other aspects of the invention, the method may comprise adding routing information, enabling the token to be routed back to the issuer.

According to other aspects of the invention, the method may comprise generating the token inside the chip card.

According to other aspects of the invention, the method may comprise using the entropy to authenticate the card was present during the transaction.

According to other aspects of the invention, the method may comprise using the entropy as input to establish a session key for subsequent secure communication.

The invention also provides a use of a security device reader adapted to receive an EMV chip card for processing this method for identifying a cardholder to a service provider.

Thanks to the invention, it is advantageously possible to create routable unlinkable anonymous token using a card reading device and an EMV chip card.

This method advantageously allows the identification and authentication of a cardholder without disclosing any identifying data. This enables data minimization and privacy for the cardholder, with unlinkability, unobservability, anonymity, pseudonymity, using any deployed EMV Chip Card.

The invention for example enables advantageously a bank to maintain privacy for their cardholders while identifying and authenticating them, using already deployed EMV Chip Cards. There is no disclosure of any sensitive data that can be traced to the cardholder, and it enables the separation of different digital persona, hence creating trust in the society.

The method according to the invention uses a standard EMV chip and a security device reader to generate unobservable, unlinkable routable cryptographic tokens to be used as a basis to provide anonymous identification of cardholders. The invention provides multiple persona and strong authentication for online services that enables the end-user to have internet presence using different persona. The method can be for example used into a federated identity management model. In addition the invention allows strict adherence to data minimization and controlled disclosure of credentials.

The various aspects, features and advantages of the invention will become more fully apparent to those having ordinary skill in the art upon careful consideration of the following Detailed Description, given by way of example thereof, with the accompanying drawing described below:

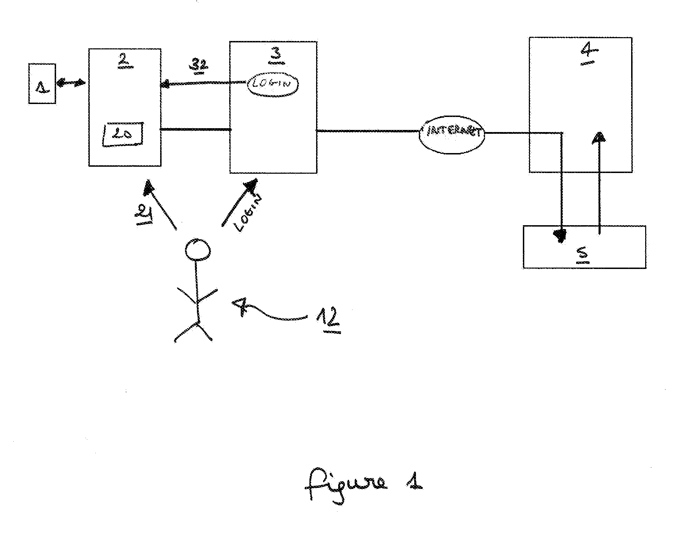

FIG.1 schematically shows an embodiment of the present invention.

## DETAILED DESCRIPTION

The present invention may be understood according to the detailed description provided herein. Shown in Figure 1 is a security device 1 such as an EMV chip card 1 of a cardholder 12, adapted to be inserted in a security device reader 2.

On login on an internet browser 3, the browser sends a request 32 to the security device reader 2 in order to start the generation of an anonymous routable token 20.

For doing so, the security device reader 2 receives the request, and start by inspecting the inserted EMV card, by doing an application selection process. Based on the found application, the security device reader 2 determines the scheme operator, namely which credit card brand. The security reader device 2 initiates a EMV chip transaction (GPO) and as indicated by a file called the Application File Locator (AFL), the security device reader 2 then reads out data from the application. The security device reader 2 reads out the SDA certificate and relating data, routing information such as the Issuer Identity, Identifying data such as the PAN (primary account number), the PSN (PAN sequence number), the EXPIRY (the expiry date of the security device), request user to enter a PIN code.

The Issuer Public Key is assembled from the data. As each issuer may also have several public keys, there is an IssuerPublicKeyIndex that can reveal which of the Issuer Public Key is on the chip card. This index is also stored for later use.

The security device reader then generates entropy. The entropy is for example generated using one or more GENERATE Application Cryptogram (AC), or using a random number generator or random value instead of the generate application cryptogram.

The security device reader 2 then completes EMV Chip transaction, generating one or more consecutive application cryptograms (AC1. .ACn) using the generate application cryptogram function, and stores the ATC for later use. The security device reader 2 stores the data used when generating the application cryptogram.

Once these data are extracted and stored, the security device reader 2 generates an "anonymous unlinkable, routable token" consisting of a routing information and cryptographic token.

The cryptographic token is generated by encrypting with the IssuerPublicKey a message which comprises:

- the identifying data (PAN/PSN/EXPIRY);
- the entropy (AC);
- the Selected Persona; and
- padding information.

The security device reader 2 starts producing a message "MSG1", generating a hash of the message "MSG1", as defined in ISO9796-2. This step includes adding the IDENTIFIER to MSG1: {PAN || EXPIRY_DATE} or {PAN || PSN} or {USERID} read out from the chip card.

The security device reader appends to the message MSG1, the application cryptograms AC1 ...ACn, ATC1...ATCn, then performs a message digest: H = Hash (MSG1) .

$$MSG = be \{MSG1|| H ||PADDING\}$$

$$TOKEN = ENCRYPT( MSG, ISSUERPUBLICKEY)$$

$$ANONYMOUS\_TOKEN = \{SCHEME || ISSUER\_IDENTITY || IssuerPublicKeyIdx$$

$$| TOKEN\}$$

The created token "ANONYMOUS_TOKEN" is an anonymous, unlinkable, routable. It is unobservable by anyone else than the issuer. The issuer is therefore able to verify the identity of the cardholder, and also authenticates the cardholder. The generated token comprises the routing information scheme and issuer identity, to enable the token to be routed back to the correct issuer 4. The ANONYMOUS_TOKEN is sent to the online bank 4.

An online bank application of the online bank receives the anonymous token over the internet from the browser 3, and forwards it to a verification server 4.

The verification server 4 receives the anonymous routable token, and looks up the SCHEME and ISSUER_ IDENTITY, in order to determine which product has been used to generate the anonymous token.

The verification server 4 looks up the IssuerPublicKeyIdx, using the IssuerPublicKeyIdx, and decrypts the anonymous token 20 "ANONYMOUS_TOKEN" using the corresponding IssuerPrivateKey. The verification server 4 validates the integrity of the message, by verifying the hash digest H. If it is not consistent, the process is aborted.

In a further step, the verification server 4 extracts the identifying information (PAN || EXPIRY_DATE) from the token, and looks up these data in its database. If the identifier cannot be found, the process is aborted.

As the final step the server lookup if a PERSONA was selected by the end-user, and based on this returns the corresponding IDENTIFIER of the cardholder.

The online banking server then receives the Identifier and a positive acknowledge that the cardholder has been authenticated, and can then start to communicate with the cardholder.

It will be well understood that this embodiment is not a limited example. In another embodiment, the recovery process is for example performed after generating entropy, so as to improve user experience and also to consume less power in case of a battery operated device. In this case, the security device reader 2 completes the recovery mechanism by verifying the last step of doing data integrity check of the recovered information.

In another embodiment, during the transaction process, the cardholder optionally is requested to enter PIN 21, in order to establish cardholder presence, where the PIN may be verified locally by the chip card, or included in the message (MSG1) as an online PIN. The PIN code is for example placed within the message, or is part of the generated AC (Application Cryptogram).

In another embodiment, the cardholder selects a Persona: the security device reader 2 requests the user to select a Persona, and appends this as PERSONA to MSG1.

Optionally different elements are appended to the message MSG1 such as IAD1... IADn, CID1...CIDn

Optionally, the security device reader appends any combination of CID, PSN, PIN to MSG1.

In another embodiment, in addition, the message contains a checksum over the data, and technical data, that are used to establish non-repudiation, and link the transaction to user consent, or certain attributes.

In another embodiment the anonymous token contains data and cryptograms generated by the EMV chip to authenticate the user, and link the token to a certain session, indicate a user selected Persona, and establish non-repudiation using technical data. By linking technical data and context, it is possible to communicate context to the cardholder, and establish his approval or consent, resulting in strong user act-of-will and establish user awareness. This advantageously increases both security and usability.

In another embodiment the entropy is used to establish a shared secret, that may be used for subsequent secure communication between the issuer and the security device reader 2.

In another embodiment the passing scheme is other than iso9796-2.

In order to avoid reading the user identity, which may compromise privacy of the user (pan, etc....) , the security device reader optionaly blocks incoming APDU commands used to retrieve card data (such as for example the PAN. The security device reader 2 performs as a CAP reader that avoids direct access from the host to the card.

In another embodiment, the EMV chip card generates the anonymous token thanks to a functionality directly implemented on the chip card.

In another embodiment, the server extracts and verifies the application cryptogram (entropy), ATC and IAD, so as to authenticate that the cardholder was present or verifies that PIN was requested, which also means that cardholder was present. If the validation is correct the process continues.

Thanks to the invention, the cardholder selects which persona he wants to act as, enabling separation between persona/context, i.e. banking customer, cardholder, citizen, corporate user, patient.... Then issuer verifies the anonymous token and identified the credential used to create the anonymous token.

Thanks to the invention, an identity management system is advantageously able to manage multiple personas.

It will be well understood that the invention is not limited to a card and card reader, but may be implemented on any security device.

## Claims

1. Method for identifying a cardholder to a service provider, said cardholder having an EMV chip card delivered by an issuer wherein it comprises creating a token for identification to said service provider from said EMV chip card.

2. Method according to claim 1, wherein it comprises extracting a public key of the issuer from the EMV chip card of the user.

3. Method according to claim 2, wherein it comprises encrypting a message with the public key of the issuer, said message comprising identifying data, padding information.

4. Method according to claim 3, wherein it comprises using the PIN of within said message.

5. Method according to claim 3 wherein it comprises selecting an identity.

6. Method according to any previous claim, wherein it comprises adding routing information, enabling the token to be routed back to the issuer.

7. Method according to any previous claims, wherein it comprises generating the token inside the chip card.

8. Method according to any previous claim, wherein it comprises using the entropy to authenticate the card was present during the transaction.

9. Method according to any previous claim, wherein it comprises using the entropy as input to establish a session key for subsequent secure communication.

10. Use of a security device reader adapted to receive an EMV chip card for processing the method according to claim 1 to 9.

figure 1

Europäisches
Patentamt

European
Patent Office

Office européen
des brevets

**EUROPEAN SEARCH REPORT**

Application Number

EP 11 30 5668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/034424 A1 (ENGBERG STEPHAN J [DK]) 14 April 2005 (2005-04-14) * abstract * * page 1, line 5 - page 10, line 15 * * page 11, line 13 - page 15, line 3 * * figures 1-9 * ----- | 1-10 | INV. H04L9/32 G07F7/10 H04L29/06 |
| X | WO 2005/001618 A2 (MASTERCARD INTERNATIONAL INC [US]; RUTHERFORD BRUCE [US]; DAGHER ALFRE) 6 January 2005 (2005-01-06) * abstract * * page 1, line 9 - page 7, line 7 * * page 8, line 18 - page 13, line 23 * * figures 1-3,8 * ----- | 1-10 | |
| E | WO 2011/066658 A1 (SECUREKEY TECHNOLOGIES INC [CA]; BOYSEN ANDRE MICHEL [CA]; WOLFOND GRE) 9 June 2011 (2011-06-09) * abstract * * paragraphs [0001] - [0021], [0023] - [0035], [0099] - [0108], [0117] - [0143] * * figures 1,2,8-10b * ----- | 1-10 | |
| | | | TECHNICAL FIELDS SEARCHED (IPC) H04L G07F |

The present search report has been drawn up for all claims

| Place of search | Date of completion of the search | Examiner |
|---|---|---|
| Munich | 17 November 2011 | Mariggis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 11 30 5668

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2011

| Patent document cited in search report | | Publication date | Patent family member(s) | | Publication date |
|---|---|---|---|---|---|
| WO 2005034424 | A1 | 14-04-2005 | CA | 2541824 A1 | 14-04-2005 |
| | | | CN | 1894923 A | 10-01-2007 |
| | | | EP | 1678869 A1 | 12-07-2006 |
| | | | JP | 2007534042 A | 22-11-2007 |
| | | | KR | 20060123134 A | 01-12-2006 |
| | | | WO | 2005034424 A1 | 14-04-2005 |
| | | | ZA | 200602880 A | 29-08-2007 |
| WO 2005001618 | A2 | 06-01-2005 | AU | 2004252824 A1 | 06-01-2005 |
| | | | BR | PI0411005 A | 04-07-2006 |
| | | | CA | 2528451 A1 | 06-01-2005 |
| | | | CN | 1853189 A | 25-10-2006 |
| | | | EP | 1646976 A2 | 19-04-2006 |
| | | | JP | 2006527430 A | 30-11-2006 |
| | | | KR | 20060034228 A | 21-04-2006 |
| | | | MX | PA05012969 A | 17-03-2006 |
| | | | US | 2008154770 A1 | 26-06-2008 |
| | | | WO | 2005001618 A2 | 06-01-2005 |
| WO 2011066658 | A1 | 09-06-2011 | NONE | | |

EPO FORM P0459

For more details about this annex : see Official Journal of the European Patent Office, No. 12/82

## REFERENCES CITED IN THE DESCRIPTION

**Patent documents cited in the description**

- WO 2002087148 A, Camenisch
- WO 2010028705 A1, Pashalidis